# EUROPÄISCHE PATENTANMELDUNG

(11) **EP 2 198 688 A1**
(43) Veröffentlichungstag der Anmeldung: **23.06.2010**
(21) Anmeldenummer: 09170851.1
(22) Anmeldetag: 21.09.2009
(51) Int. Cl.: A01F 25/16, A01F 25/18, G01N 9/36

(54) **Verfahren zur Steuerung der Verdichtung eines landwirtschaftlichen Guts in einem Fahr- bzw. Flachsilo und Verdichtungsfahrzeug**

(30) Priorität: 19.12.2008 DE 102008063852
(71) Anmelder: CLAAS Selbstfahrende Erntemaschinen GmbH, 33428 Harsewinkel (DE)
(72) Erfinder: Steckel, Thilo, 33330, Gütersloh (DE)

(57) **Zusammenfassung**

Die Erfindung betrifft ein Verfahren zur Steuerung der Verdichtung eines landwirtschaftlichen Guts in einem Fahr- bzw. Flachsilo, das durch die folgenden Schritte gekennzeichnet ist: Ermitteln einer Höhenlage der Oberfläche des zu verdichtenden Guts zu zwei oder mehreren Verdichtungszeitpunkten, Vergleichen der Höhenlage mit einer zuvor ermittelte Höhenlage, Abbrechen der Verdichtung, wenn die Differenz der Höhenlagen einen Grenzwert unterschreitet.

Die Erfindung betrifft weiterhin ein Verdichtungsfahrzeug zur Verdichtung eines landwirtschaftlichen Guts in einem Fahr- bzw. Flachsilo, mit einer Empfangseinheit zum Empfangen eines GPS-Signals, und einer Auswerteeinrichtung, die ausgebildet ist, aus dem GPS-Signal eine Position des Verdichtungsfahrzeugs in der Ebene zu ermitteln, das gekennzeichnet ist durch eine Abstandsmessvorrichtung, die ausgebildet ist, einen Abstand des Verdichtungsfahrzeugs zu zumindest einer Referenzmarkierung zu ermitteln, und eine Auswerteeinriehtung, die ausgebildet ist, aus der Position des Verdichtungsfahrzeugs und dem Abstand des Verdichtungsfahrzeugs zu der zumindest einen Referenzmarkierung die Höhenlage des Verdichtungsfahrzeugs zu ermitteln,

## Beschreibung

Die Erfindung betrifft ein Verfahren zur Steuerung der Verdichtung eines landwirtschaftlichen Guts in einem Fahr- bzw. Flachsilo.

Die Erfindung betrifft weiterhin ein Verdichtungsfahrzeug zur Verdichtung eines landwirtschaftlichen Guts in einem Fahr- bzw. Flachsilo, mit einer Empfangseinheit zum Empfangen eines GPS-Signals, und einer Auswerteeinrichtung, die ausgebildet ist, aus dem GPS-Signal eine Position des Verdichtungsfahrzeugs in der Ebene zu ermitteln.

Landwirtschaftliche Güter, insbesondere Grünfutter wie beispielsweise Gras, Mais, Klee oder Luzerne, meist als Häckselgut, werden in Hochsilos, in Ballen oder in Fahr- bzw. Flachsilos siliert, d.h. durch Milchsäuregärung konserviert. Dazu werden die landwirtschaftlichen Güter verdichtet, luftdicht abgeschlossen und gelagert.

Fahr- bzw, Flachsilos sind meist ebenerdig und können seitlich von Wänden begrenzt sein. Das zu verdichtende landwirtschaftliche Gut wird ein Fahr- bzw. Flachsilo aufgebracht und mit Verdichtungsfahrzeugen verdichtet. Eine korrekte Verdichtung ist für die Qualität der Silage entscheidend und gerade bei Fahr- bzw. Flachsilos problematisch, Insbesondere eine zu geringe Verdichtung kann die Qualität der Silage negativ beeinflussen. Aber auch eine zu hohe Verdichtung ist nachteilig und wirkt sich zudem negativ auf die Wirtschaftlichkeit der Silagelierstellung aus, da mehr Verdichtungsarbeit als erforderlich geleistet wurde.

Insbesondere die Eigenschaften der zu verdichteten landwirtschaftlichen Güter beeinflussen die Verdichtung stark und stellen eine besondere Herausforderung dar.

Da es sich bei den zu verdichteten landwirtschaftlichen Gütern um Naturprodukte handelt, sind die Eigenschaften nicht im Voraus bekannt, sondern können stark variieren. Stoffliche Zusammensetzung, Struktur, Feuchte und mechanische Eigenschaften des Guts beispielsweise können sich innerhalb eines Fahr- bzw. Flachsilos unterscheiden, insbesondere aber auch über die Zeit verändern und in verschiedenen Regionen sowie je nach Witterung unterschiedlich ausfallen. Der Untergrund eines Fahr- bzw. Flachsilos und die durch die aufgebrachten landwirtschaftlichen Güter entstehende Oberfläche können Neigungen und/oder eine komplexe Geometrie aufweisen. Je nach Randbedingungen kann das landwirtschaftliche Gut auch unterschiedlich verschmutzt sein. Weiterhin wird in einem Fahr- bzw. Flachsilo neues zu verdichtendes Gut auf teilweise noch nicht ausreichend verdichtetes Gut eingebracht und die Verdichtung erfolgt nicht anhand fest vorgeschriebener Bahnen und nur einer einzigen Überfahrt eines Verdichtungsfahrzeugs, sondern durch eine Vielzahl von Überfahrten, die keinem exakt vorgegebenen Verlauf folgen müssen

In Abhängigkeit der schwankenden Eigenschaften wie Art, Reifegrad und Struktur des zu silierenden Gutes, sind zudem unterschiedliche Silodichten erforderlich. Aufgrund der genannten besonderen Schwierigkeiten bei der Verdichtung in Fahr-bzw. Flachsilos wird diese erforderliche Dichte in der Praxis jedoch nur selten und dann eher zufällig erreicht. Eine unzureichende Verdichtung führt jedoch zu einer verschlechterten Qualität der Silage, so dass z.B. bei daraus resultierender geringerer oder unzureichender Futterqualität die Futteraufnahme durch Nutztiere und damit auch beispielsweise deren Milchleistung und Gewichtszunahme sinkt.

Zur Steuerung der Verdichtung sind verschiedene Ansätze bekannt. Zur Ermittlung der dreidimensionalen Position eines Verdichtungsfahrzeugs ist es bekannt, mit einem Tachymeter oder einem Theodoliten ein Prisma auf dem Verdichtungsfahrzeug anzupeilen und die generierten Daten weiterzuverarbeiten und anzuzeigen. Dieses Vorgehen erfordert jedoch den zusätzlichen Aufwand, für jeden Verdichtungsvorgang Tachymeter oder Theodoliten bereitzustellen und zu kalibrieren. Die hierfür eingesetzten Geräte sind zudem sehr teuer, was sich einerseits nachteilig auf die Wirtschaftlichkeit der Silage auswirkt und weiterhin eine entsprechende Sicherung der Geräte erfordert. Weiterhin erfordert die Verarbeitung und Auswertung der mit einem Tachymeter oder Theodoliten gewonnenen Daten einen sehr hohen Aufwand. Diese Vielzahl der genannten Nachteile verhindert den Einsatz dieses Vorgehens in der landwirtschaftlichen Praxis.

US 5,471,391 beschreibt ein Verfahren zur Verdichtungssteuerung, bei dem ein aus GPS-Daten berechnetes dreidimensionales Silomodell mit einem Silomodell mit gewünschter Verdichtung in Übereinstimmung gebracht wird. Dazu werden die Anzahl der Überfahrten ermittelt und mit Soll-Überfahrten verglichen. Nachteilig an diesem System ist insbesondere, das aufgrund variabler Guteigenschaften das theoretisch ermittelte Silomodell bzw. die theoretisch ermittelten Soll-Überlahrten häufig nicht die tatsächlich erforderliche Verdichtung erzielen. Weiterhin ist die Genauigkeit der Ergebnisse dieses Verfahrens unzureichend.

Die EP 1 795 885 A1 schlägt vor, die Dichte des landwirtschaftlichen Guts mit einem Dichtesensor zu messen. Dichtesensoren erfordern jedoch den Kontakt mit dem Messgut, so dass der Dichtesensor über einen Gleitschuh oder Schlitten über das landwirtschaftliche Gut geführt werden muss. Dabei bohrt sich der Gleitschuh oder Schlitten häufig in das Gut oder schiebt das Gut vor sich her. Dies kann einerseits zu Unterbrechungen und erforderlichen Korrekturen führen und damit den Ablauf des Verdichtungsprozesses negativ beeinflussen und andererseits die Zuverlässigkeit der Messungen negativ beeinträchtigen. Weiterhin ist auch die Qualität der Messergebnisse hinsichtlich der Übereinstimmung mit der tatsächlich erzielten Dichte im Silo unzureichend.

Es besteht somit ein Bedarf nach einem Verfahren zur Steuerung der Verdichtung eines landwirtschaftlichen Guts in einem Fahr- bzw. Flachsilo das eine einfache, wirtschaftlich effiziente Steuerung der Verdichtung ermöglicht und bevorzugt eine ausreichend hohe Genauigkeit besitzt. Weiterhin besteht Bedarf nach einem Verfahren zur Steuerung der Verdichtung eines landwirtschaftlichen Guts in einem Fahr- bzw. Flachsilo, das sowohl einer unzureichenden ais auch einer zu starken Verdichtung des landwirtschaftlichen Guts entgegenwirkt und insbesondere auf die besonderen landwirtschaftsspezifischen Anforderungen ausgerichtet ist.

Weiterhin besteht ein Bedarf nach einem Verdichtungsfahrzeug zur Verdichtung eines landwirtschaftlichen Guts in einem Fahr- bzw. Flachsilo, das eine einfache, wirtschaftlich effiziente und ausreichend genaue, insbesondere weder zu geringe noch zu starke, Verdichtung ermöglicht und insbesondere für den Einsatz in der Landwirtschaft geeignet ist.

Es ist somit Aufgabe der vorliegenden Erfindung, ein Verfahren zur Steuerung der Verdichtung eines landwirtschaftlichen Guts in einem Fahr- bzw. Flachsilo bzw. ein Verdichtungsfahrzeug zur Verdichtung eines landwirtschaftlichen Guts in einem Fahr- bzw. Flachsilo bereitzustellen, das einen oder mehrere der genannten Nachteile beseitigt oder vermindert und insbesondere den aufgezeigten Bedarf zumindest teilweise deckt.

Die Aufgabe wird erfindungsgemäß gelöst durch ein eingangs genanntes Verfahren gekennzeichnet durch die Schritte: Ermitteln einer Höhenlage der Oberfläche des zu verdichtenden Guts zu zwei oder mehreren Verdichtungszeitpunkten, Vergleichen der Höhenlage mit einer zuvor ermittelten Höhenlage, Abbrechen der Verdichtung, wenn die Differenz der Höhenlagen einen Grenzwert unterschreitet.

Die Erfindung beruht auf der Erkenntnis, dass mit zunehmender Verdichtung eines landwirtschaftlichen Guts die Höhenabnahme pro Überfahrt eines Verdichtungsfahrzeugs geringer wird. Aufbauend auf dieser Erkenntnis kann das erfindungsgemäße Verfahren die Verdichtung besonders effizient und gegenüber den im Stand der Technik bekannten Lösungen vereinfacht steuern. Indem die Höhenlage der Oberfläche des zu verdichtenden Guts erfindungsgemäß verfolgt und mit vorhergehenden Werten verglichen wird, kann abgeleitet werden, ob die Höhe noch deutlich abnimmt, d.h. die Differenz der Höhenlagen noch groß ist, oder nicht. Wenn sich die Höhenlage der Oberfläche des zu verdichtenden Guts trotz der Überfahrt eines Verdichtungsfahrzeugs nicht mehr stark ändert, lässt dies den Schluss auf eine ausreichende Verdichtung zu und die Verdichtung kann abgebrochen werden. Das Unterschreiten des Grenzwerts stellt somit ein Abbruchkriterium dar. Das Erreichen des Abbruchkriteriums bedeutet, dass keine weiteren Überfahrten erforderlich sind.

Damit kann in vorteilhafter Weise nicht nur sichergestellt werden, dass eine ausreichende Verdichtung erzielt wird, sondern weiterhin verhindert werden, dass eine zu hohe Verdichtung erzielt wird, indem die Verdichtung bei einem ausreichenden Maß abgebrochen wird. Eine zu hohe Verdichtung kann sich nicht nur negativ auf die Qualität der Silage, sondern insbesondere auch auf die Wirtschaftlichkeit und somit auf die Effizienz des Verdichtungsprozesses auswirken.

Ein weiterer Vorteil der Erfindung ist es, dass durch die Ableitung eines Abbruchkriteriums aus dem Vergleich der Höhenlage der Oberfläche des zu verdichtenden Guts zu verschiedenen Verdichtungszeitpunkten auf aufwändige und teure Dichteermittlungen verzichtet werden kann, und damit der erforderliche Aufwand für die Erfassung und Auswertung von Daten so gering wie möglich gehalten wird.

Dabei ist es insbesondere bevorzugt, die Verdichtung abzubrechen, wenn die Differenz der Höhenlagen, d.h. das Ergebnis des Vergleichs der Höhenlagen zu unterschiedlichen Verdichtungszeitpunkten, einen Grenzwert unterschreitet. Dieser Grenzwert kann ein vorgegebener Grenzwert sein, der beispielsweise aus Erfahrungswerten oder Guteigenschaften, Randbedingungen und Silogeometrie abgeleitet ist. Der Grenzwert kann auch aus dem Verlauf der Differenz der Höhenlagen abgeleitet werden, beispielsweise als Veränderung der Differenz im Vergleich zu einer zuvor ermittelten Differenz,

Die Höhenlage der Oberfläche des zu verdichtenden Guts entspricht der Ausdehnung in vertikaler Richtung des landwirtschaftlichen Guts im Fahr- bzw. Flachsilo. Wenn neues zu verdichtendes Gut in das Fahr- bzw. Flachsilo eingebracht wird, nimmt die Höhenlage der Oberfläche des zu verdichtenden Guts zu. Wird das Gut verdichtet, nimmt die Höhenlage ab. Die Höhenlage kann in absoluter Höhe oder als Höhe gegenüber einem Referenzniveau angegeben sein.

Als Verdichtungsfahrzeuge können beispielsweise Walzenfahrzeuge oder landwirtschaftliche Zugmaschinen, wie Traktoren, ggf. mit besonderer Reifenbreite und/oder besonderen Reifendruck, zum Einsatz kommen. Verdichtungsfahrzeuge im Sinne der vorliegenden Erfindung sind weiterhin alle Fahrzeuge, die eingesetzt werden, um landwirtschaftliche Güter im Fahr- bzw. Flachsilo zu verdichten. Je nach eingesetzten Verdichtungsfahrzeugen unterscheidet sich die pro Überfahrt verdichtete Fläche. Ein Walzenfahrzeug verdichtet beispielsweise auf der gesamten Walzenbreite, ein 4-Rad-Fahrzeug wie ein Traktor verdichtet auf den vier Reifenaufstandsflächen, Die jeweilige verdichtungswirksame Auflagefläche ist für die jeweiligen Verdichtungsfahrzeuge bekannt bzw. ermittelbar.

Ein Verdichtungszeitpunkt im Sinne der vorliegenden Erfindung ist ein Zeitpunkt, an dem eine Verdichtung des landwirtschaftlichen Guts stattfindet. Dies ist beispielsweise für eine bestimmte Position im Fahr- bzw. Flachsilo der Zeitpunkt, an dem sich ein Verdichtungsfahrzeug an dieser Position befindet.

Dabei ist es insbesondere bevorzugt, dass die Höhenlage der Oberfläche des zu verdichtenden Guts für eine oder mehrere Positionen zu zwei oder mehreren Verdichtungszeitpunkten ermittelt und die Höhenlage an einer Position mit einer an derselben Position zuvor ermittelten Höhenlage verglichen wird.

Damit wird erreicht, dass die Höhenlage der Position des Fahr- bzw. Flachsilos, an der sie ermittelt wurde, zugeordnet werden kann. Auf diese Weise kann die Höhenlage kontinuierlich beispielsweise durch ein sich im Fahr- bzw. Flachsilo bewegendes Verdichtungsfahrzeug erfasst werden, wobei gleichzeitig sichergestellt wird, dass die Höhenlagen den jeweiligen Erfassungspositionen zugeordnet werden können. Wird eine Position zu einem späteren Verdichtungszeitpunkt wieder überfahren, so kann die zuvor an derselben Position ermittelte Höhenlage mit der aktuellen Höhenlage dieser Position verglichen werden. Somit kann in vorteilhafter Weise an einer Vielzahl von Positionen eines Fahr- bzw. Flachsilos die Verdichtung mit dem erfindungsgemäßen Verfahren gesteuert werden. So kann an einigen Stellen im Silo das Abbruchkriterium beispielsweise schon erreicht und damit an diesen Stellen keine weitere Verdichtung erforderlich sein, während die Differenz der Höhenlagen an deren Stellen im Silo noch so groß ist, dass die Verdichtung noch fortzusetzen ist.

Bei der Zuordnung der Höhenlagen zu Positionen ist weiterhin vorzugsweise die jeweilige verdichtungswirksame Auflagefläche des Verdichtungsfahrzeugs zu berücksichtigen, da beispielsweise bei einem Traktor der Bereich zwischen den Reifen bei einer Überfahrt nicht verdichtet wird und sich die ermittelte Höhenlage des Verdichtungsfahrzeugs nur einen Rückschluss auf die Höhenlage der Oberfläche des zu verdichtenden Guts an den Reifenposition zulässt.

Weiterhin ist bevorzugt, dass die Verdichtung nicht abgebrochen oder wieder aufgenommen wird, wenn die Differenz der Höhenlagen einen Zuwachs in der Höhenlage der Oberfläche des zu verdichtenden Guts anzeigt und/oder die Differenz der Höhenlagen einen Schwellwert überschreitet. Zur Unterscheidung, ob es sich bei der Differenz der Höhenlagen um einen Zuwachs oder eine Abnahme handelt, ist die Vergleichsrichtung und das Vorzeichen des Ergebnisses entsprechend zu berücksichtigen. Ein Zuwachs in der Höhenlage der Oberfläche des zu verdichtenden Guts zeigt an, dass neues, zu verdichtendes Gut aufgebracht wurde. In diesem Fall ist die Verdichtung fortzusetzen bzw. wieder aufzunehmen. Vorzugsweise wird die Verdichtung nur dann nicht abgebrochen oder wieder aufgenommen, wenn der Zuwachs einen bestimmten Wert Überschreitet. Damit kann ausgeschlossen werden, dass es sich bei dem Zuwachs nur um eine geringe Veränderung handelt, die beispielsweise aus einer Messungenauigkeit oder einem leichten Rückfedern von ausreichend verdichtetem Gut handelt.

Weiterhin kann die Verdichtung wieder aufgenommen werden, wenn beispielsweise zu einem späteren Zeitpunkt, zu dem sich etwa bestimmte Guteigenschaften wie Feuchte geändert haben können, erneut eine deutliche Höhenabnahme erzielt wird und die Differenz der Höhenlage einen Schwellwert überschreitet. Dieser Schwellwert ist vorzugsweise so bemessen, dass Messungenauigkeiten oder leichtes Nachgeben von ausreichend verdichtetem Gut nicht zur Wiederaufnahme der Verdichtung führen.

Zur weiteren Vereinfachung und effizienten Gestaltung des Verfahrens ist es bevorzugt, dass das Ergebnis des Vergleichs und/oder das Vorliegen des Abbruchkriteriums zu speichern und/oder anzuzeigen. Dabei ist bevorzugt, die Anzeige und/oder Speicherung der Höhenlagen für die jeweilige Position, an der die Höhenlage ermittelt wurde, vorzunehmen. Die Speicherung der Daten erleichtert die Dokumentation und Abrechnung der Leistung. Dies ist beispielsweise insbesondere im Verhältnis von Auftraggeber und Auftragnehmer und im Qualitätsmanagement von Vorteil.

Die Anzeige der Daten beispielsweise auf einer Anzeigevorrichtung für den Fahrer eines Verdichtungsfahrzeugs erlaubt dem Fahrer, das Verdichtungsfahrzeug entsprechend zu steuern und insbesondere noch nicht ausreichend verdichtete Bereiche, die das Abbruchkriterium noch nicht erreicht haben, zu überfahren. Dabei ist es insbesondere bevorzugt, eine intuitiv erfassbare Anzeigeform zu wählen, beispielsweise die Einfärbung einer zwei- oder dreidimensionalen Darstellung des Fahr- bzw. Flachsilos in den Ampelfarben rot (unzureichende Verdichtung), gelb (mittlere Verdichtung), grün (ausreichende Verdichtung, Abbruch), vorzugsweise mit Darstellung der aktuellen Position und Fahrtrichtung des Verdichtungsfahrzeugs.

Insgesamt ermöglicht es das erfindungsgemäße Verfahren, einen Verdichtungsvorgang so zu steuern, dass eine angestrebte Soll-Dichte des zu verdichtenden Guts erreicht werden kann, wobei ein über- und Unterschreiten der angestrebten Dichte verhindert werden kann.

Die Erfindung kann dadurch fortgebildet werden, dass die Höhenlage mit den folgenden Schritten ermittelt wird:
- Ermitteln einer Position eines Verdichtungsfahrzeugs in der Ebene, vorzugsweise aus einem GPS-Signal,
- Ermitteln eines Abstands des Verdichtungsfahrzeugs zu zumindest einer Referenzmarkierung, vorzugsweise mittels einer am Verdichtungsfahrzeug angeordneten Abstandsmessvorrichtung,
- Ermitteln der Höhenlage des Verdichtungsfahrzeugs aus der Position des Verdichtungsfahrzeugs und dem Abstand des Verdichtungsfahrzeugs zu der zumindest einen Referenzmarkierung,
- Ableiten der Höhenlage der Oberfläche des zu verdichtenden Guts aus der Höhenlage des Verdichtungsfahrzeugs.

Die erfindungsgemäße Fortbildung ermöglicht eine besonders effiziente Ermittlung der Höhenlage bei gleichzeitig für die Steuerung der Verdichtung ausreichender Genauigkeit. Erfindungsgemäß ist dabei zunächst von der Position in der Ebene eines Verdichtungsfahrzeugs, das das Gut im Fahr- bzw. Flachsilo verdichtet, auszugehen. Eine Position in der Ebene ist eine Position in einem zweidimensionalen, z.B. kartesischen, geografischen oder Polar-Koordinatensysterm.

Die Position in der Ebene eines Verdichtungsfahrzeugs kann hinreichend genau beispielsweise aus einem GPS-Signal ermittelt werden. GPS steht für "Global Positioning System" und bezeichnet satellitengestützte Navigationssysteme. Darunter fallen beispielsweise das US-amerikanische System "NAVSTAR-GPS", das europäische System "Galileo", das russische System "GLONASS" oder das chinesische System "Compass".

Weiterhin wird zur Ermittlung der Höhenlage der Abstand des Verdichtungsfahrzeugs zu einer Referenzmarkierung herangezogen. Die Referenzmarkierung ist nach ihrer Position und Höhenlage bekannt. Bei der Referenzmarkierung kann es sich beispielsweise um einen Reflektor oder einen Reflektorstreifen handeln, der mit einer Abstandsmessvorrichtung erfasst werden kann. Die Referenzmarkierung kann einfach und kostengünstig realisiert werden und ist nur einmalig bezüglich ihrer Position und Höhenlage einzumessen, falls diese nicht bereits bekannt sind. Die Referenzmarkierung ist für eine Vielzahl von Verdichtungsvorgängen wieder verwendbar.

Der Abstand zur Referenzmarkierung wird bevorzugt mit einer am Verdichtungsfahrzeug angeordneten Abstandsmessvorrichtung ermittelt. Die Abstandsmessung wird bevorzugt als optische Abstandsmessung, insbesondere mittels eines Lasers, durchgeführt. Dies hat den Vorteil, dass entsprechende Abstandsmessvorrichtungrn eingesetzt werden können, die eine hohe Genauigkeit liefern, keine hohe Investition erfordern und für den Einsatz in landwirtschaftlichen Anwendungsgebieten geeignet sind. Weiterhin ist es vorteilhaft, wenn die Abstandsmessvorrichtung an dem Verdichtungsfahrzeug angeordnet ist. Auf diese Weise muss kein externes Geräte vorgehalten, positioniert und gesichert werden.

Wenn die Positionen von Verdichtungsfahrzeug und Referenzmarkierung und weiterhin die Höhenlage der Referenzmarkierung bekannt sind, kann durch geometrische Berechnungen die Höhenlage des Verdichtungsfahrzeugs bzw. der Abstandsmessvorrichtung am Verdichtungsfahrzeug ermittelt werden. Daraus wiederum kann die Höhenlage der Unterkante des Verdichtungsfahrzeugs, beispielsweise von Reifen oder einer Walze, ermittelt werden, die der Höhenlage der Oberfläche des zu verdichtenden Guts entspricht.

Auf diese Weise ist es erfindungsgemäß möglich, die Höhenlagen der Oberfläche des zu verdichtenden Guts mit einer Genauigkeit zu ermitteln, die erforderlich ist, um aus der Differenz der Höhenlagen zu unterschiedlichen Zeitpunkten auf die Verdichtung zu schließen. Die Erfindung beruht dabei auf der Erkenntnis, dass die aus einem GPS-Signal ermittelbare Höhenlage nicht genau genug ist, um die Verdichtung zu steuern. Durch die sehr effizient realisierbare Abstandsmessung kann die Höhenlage erfindungsgemäß auf einfache und wirtschaftliche Weise hinreichend genau bestimmt werden. Weder sind dafür externe, teure Geräte wie beispielsweise ein Tachymeter oder ein Theodolit erforderlich, noch ist eine aufwändige und fehleranfällige direkte Messung der Dichte erforderlich. Gleichzeitig ist mit den Ergebnissen des erfindungsgemäßen Verfahrens eine präzise Verdichtungssteuerung möglich.

In einer bevorzugten Fortbildung sind zwei oder mehrere Referenzmarkierungen vorgesehen. Dies hat den Vorteil, dass der Abstand zu einer oder mehreren der Referenzmarkierungen ermittelt werden kann. Dies kann sowohl die Genauigkeit als auch die Zuverlässigkeit erhöhen, insbesondere für den Fall, dass eine Referenzmarkierung defekt oder für die Abstandsmessvorrichtung nicht erfassbar sein sollte,

In einer weiteren bevorzugten Fortbildung sind zwei oder mehreren Abstandsmessvorrichtungen vorgesehen. Damit kann die Genauigkeit und Zuverlässigkeit weiter erhöht werden, beispielsweise indem aus einer Veränderung der Höhendifferenz zwischen den Abstandsmessvorrichtungen die Neigung des Verdichtungsfahrzeugs abgeleitet werden kann. Zusätzlich oder alternativ kann ein am Verdichtungsfahrzeug angeordneter Neigungssensor die Neigung des Verdichtungsfahrzeugs ermitteln.

Die Erfindung kann dadurch fortgebildet werden, dass die zumindest eine Referenzmarkierung als Referenzpunkt oder Referenzlinie ausgebildet und vorzugsweise am Rand oder außerhalb des Fahr- bzw. Flachsilos angeordnet wird.

Eine Referenzmarkierung kann beispielsweise am oberen Rand der seitlichen Silobegrenzung angebracht sein, etwa an der Kante einer das Fahr- bzw. Flachsilo begrenzenden Betonmauer oder an einem auf der Silobegrenzung oder dahinter angebrachten Geländer. Eine Referenzlinie kann sich über die gesamte oder nur über einen Teil der Länge eines Fahr- bzw. Flachsilos erstrecken. Ein Referenzpunkt kann in einer Ecke des Fahr- bzw. Flachsilos oder entlang einer der Seitenbegrenzungen angeordnet sein. Insbesondere wenn die Referenzmarkierung als Referenzlinie ausgebildet ist, ist es bevorzugt, dass zur Ermittlung der Höhenlage auch der Winkel, unter dem der Abstand zur Referenzlinie gemessen wird, bekannt ist.

Die Anordnung der Referenzmarkierung am Rand oder außerhalb des Fahr- bzw. Flachsilos ist bevorzugt, um die Bewegungsfreiheit des Verdichtungsfahrzeugs innerhalb des Fahr- bzw. Flachsilos und das Einbringen von Gut in das Silo nicht zu beeinträchtigen. Dabei ist bevorzugt, wenn sich die Referenzmarkierung in Sichtweite zum Silo befindet. Erfindungsgemäß kann eine außerhalb des Fahr- bzw. Flachsilos angeordnete Referenzmarkierung auch über dem Silo angeordnet sein.

Wenn zwei oder mehrere Referenzmarkierungen vorgesehen sind, können diese beispielsweise bevorzugt auf gegenüberliegenden Seiten des Silos oder an angrenzenden Seiten des Silos angeordnet sein.

Die Erfindung kann dadurch fortgebildet werden, dass die Fahrtrichtung des Verdichtungsfahrzeugs ermittelt und ggf. zur Ermittlung der Höhenlage herangezogen wird. Die Fahrtrichtung des Verdichtungsfahrzeugs kann beispielsweise durch einen entsprechenden Sensor erfasst oder aus GPS-Daten, insbesondere aus dem Verlauf der Positionen des Verdichtungsfahrzeugs, ermittelt werden. Wenn die Abstandsmessung in einem bestimmten Winkel zur Fahrtrichtung des Verdichtungsfahrzeugs durchgeführt wird, kann aus der Fahrtrichtung des Verdichtungsfahrzeugs und dem bekannten Verlauf einer Referenzlinie der Winkel ermittelt werden, unter dem der Abstand zwischen Verdichtungsfahrzeug und Referenzlinie gemessen wurde.

In einer bevorzugten Fortbildungsform des erfindungsgemäßen Verfahrens wird ein Maß der Verdichtung aus der Differenz der Höhenlagen abgeleitet. Ein Maß der Verdichtung kann beispielsweise aussagen, ob ein zu verdichtendes Gut noch unzureichend oder ausreichend verdichtet wurde. Das Maß der Verdichtung kann anhand vorgegebener Werte für die Differenz der Höhenlagen bestimmt oder über eine Analyse des Verlaufs der Differenz der Höhenlagen abgeleitet werden. Beispielsweise kann eine ausreichende Verdichtung als Maß der Verdichtung abgeleitet werden, wenn sich die Differenz der Höhenlage im Wesentlichen asymptotisch einem Minimalwert annähert.

Es ist besonders bevorzugt, für ein Maß der Verdichtung aus der Differenz der Höhenlagen und der Masse des eingebrachten Guts abzuleiten, Die Information zur Masse des eingebrachten Guts kann beispielsweise durch eine Wiegeeinrichtung bestimmt werden, die vorzugsweise am Silo oder in der Nähe des Silos angeordnet sein kann. Die Masse kann auch von einer Erntemaschine ermittelt werden, die das einzulagernde Gut erntet. Die Information zur Masse des eingebrachten Guts wird vorzugsweise an das Verdichtungsfahrzeug und/oder ein zentrales System übertragen.

Vorzugsweise werden aus den für eine Vielzahl von Positionen bestimmten Höhenlagen die dreidimensionalen Abmessungen des Silostocks bestimmt und mit der Information zur Masse des im Silostock eingelagerten Guts ein Maß der Verdichtung abgeleitet

Die Erfindung kann dadurch fortgebildet werden, dass für eine oder mehrere Positionen die Höhenlage zu einem oder mehreren Verdichtungszeitpunkten und/oder die Differenz der Höhenlagen zu einem oder mehreren Verdichtungszeitpunkten und der Höhe eines jeweils vorhergehenden Verdichtungszeitpunktes und/oder das Maß der Verdichtung an ein oder mehrere weitere Verdichtungsfahrzeuge und/oder ein zentrales System übersandt und/oder von einem oder mehreren weiteren Verdichtungsfahrzeuge und/oder einem zentralen System empfangen und ggf. weiterverarbeitet werden. Weiterhin ist bevorzugt, dass die Höhenlage an einer Position mit einer an derselben Position zuvor von einem weiteren Verdichtungsfahrzeug ermittelten Höhenlage verglichen wird.

Insbesondere bei größeren landwirtschaftlichen Betrieben und/oder bei größeren Fahr- bzw. Flachsilos leistet nicht nur ein Verdichtungsfahrzeug die Verdichtungsarbeit. Es ist daher bevorzugt, dass die von einem Verdichtungsfahrzeug ermittelten Informationen zu Steuerung der Verdichtung auch den anderen Verdichtungsfahrzeugen zur Verfügung stehen. Insbesondere ist bevorzugt, dass beispielsweise die Höhenlage der Oberfläche des zu verdichtenden Guts an einer Position eines ersten Verdichtungsfahrzeugs mit der Höhenlage an derselben Position, die zuvor von einem zweiten Verdichtungsfahrzeug ermittelt wurde, verglichen werden kann. Weiterhin ist bevorzugt, wenn das Ergebnis von Vergleichen von Höhenlagen und/oder das Vorliegen von Abbruchkriterien unabhängig von der Stelle ihrer Ermittlung allen an der Verdichtung beteiligten Verdichtungsfahrzeugen und/oder einem zentralen System zur Verfügung gestellt werden können und dort ggf. weiterverarbeitet und/oder zur Anzeige gebracht werden können. Dazu können die Verdichtungsfahrzeuge direkt miteinander kommunizieren und Daten austauschen und/oder ein zentrales System verwenden, an das die Daten gesendet und von dem sie empfangen werden können.

Die Verwendung eines zentralen Systems hat weiterhin den Vorteil, dass die Daten dort zentral gespeichert und zur Verfügung gestellt werden können. Auch eine Anzeige im zentralen System kann vorgesehen sein, beispielsweise um die Verdichtungsarbeit zentral zu überwachen. Wenn alle Daten zum Verdichtungsvorgang im zentralen System abgelegt und gespeichert werden, kann vom zentralen System in besonders einfacher und effizienter Weise die Durchführung der Verdichtung dokumentiert und abgerechnet werden.

Die Verdichtung stellt in der Praxis meist einen Schritt innerhalb einer Erntekette dar. Beispielsweise wird Erntegut von einer Erntemaschine auf einer Anbaufläche abgeerntet, von Transportfahrzeugen zum Fahr- bzw. Flachsilo transportiert und dort verdichtet. Zur Steuerung der Leistung der einzelnen Glieder der Erntekette ist es bevorzugt, den Verdichtungsfortschritt bzw. die Verdichtungsleistung im Fahr- bzw. Flachsilo zu berücksichtigen, um beispielsweise die Menge des in einem bestimmten Zeitraum abzuerntenden und anzuliefernden Ernteguts auf den Verdichtungsfortschritt bzw. die Verdichtungsleistung abzustimmen oder beispielsweise die Anzahl der Verdichtungsfahrzeuge im Silo zu erhöhen bzw. zu reduzieren, um den Verdichtungsfortschritt bzw. die Verdichtungsleistung der Menge an angeliefertem Gut anzupassen.

Weitere vorteilhafte Ausführungsvarianten des erfindungsgemäßen Verfahrens ergeben sich durch Kombination der hier erörterten bevorzugten Merkmals.

Gemäß eines weiteren Aspekts der Erfindung wird die Aufgabe gelöst durch ein eingangs genanntes Verdichtungsfahrzeug, das gekennzeichnet ist durch eine Abstandsmessvorrichtung, die ausgebildet ist, einen Abstand des Verdichtungsfahrzeugs zu zumindest einer Referenzmarkierung zu ermitteln, und eine Auswerteeinrichtung, die ausgebildet ist, aus der Position des Verdichtungsfahrzeugs und dem Abstand des Verdichtungsfahrzeugs zu der zumindest einen Referenzmarkierung die Höhenlage des Verdichtungsfahrzeugs zu ermitteln.

Das erfindungsgemäße Verdichtungsfahrzeug kann fortgebildet werden nach den Ansprüchen 9 bis 14. Diese Fortbildungen des erfindungsgemäßen Verdichtungsfahrzeugs weisen Merkmale auf, die es insbesondere dafür geeignet machen, für ein erfindungsgemäßes Verfahren zur Steuerung der Verdichtung eines landwirtschaftlichen Guts in einem Fahr- bzw. Flachsilo und seine Fortbildungen verwendet zu werden. Zu den Ausführungsformen, spezifischen Merkmalen, Varianten und Vorteilen der Merkmale dieses Verdichtungsfahrzeugs und seiner Fortbildungen wird auf die vorangegangene Beschreibung zu den entsprechenden Verfahrensmerkmalen und Verfahrensschritten verwiesen.

Gemäß eines weiteren Aspekts der Erfindung wird die Aufgabe gelöst durch die Verwendung einer an einem Verdichtungsfahrzeug angeordneten Abstandsmessvorrichtung zur Steuerung der Verdichtung eines landwirtschaftlichen Guts in einem Fahr- bzw. Flachsilo nach dem zuvor beschriebenen Verfahren und seiner Fortbildungen. Zu den Vorteilen, Ausführungsvarianten und Ausführungsdetails dieses weiteren Aspekts der Erfindung wird auf die vorangegangene Beschreibung zu den entsprechenden Verfahrens- und Vorrichtungsmerkmale sowie Verfahrensschritten verwiesen.

Eine bevorzugte Ausführungsform der Erfindung wird beispielhaft anhand der beiliegenden Figuren beschrieben. Es zeigen:
- Figur 1: einen Querschnitt durch ein Fahr- bzw. Flachsilo mit einem Verdichtungsfahrzeug,
- Figur 2: eine Draufsicht auf ein Fahr- bzw. Flachsilo mit zwei Verdichtungsfahrzeugen.

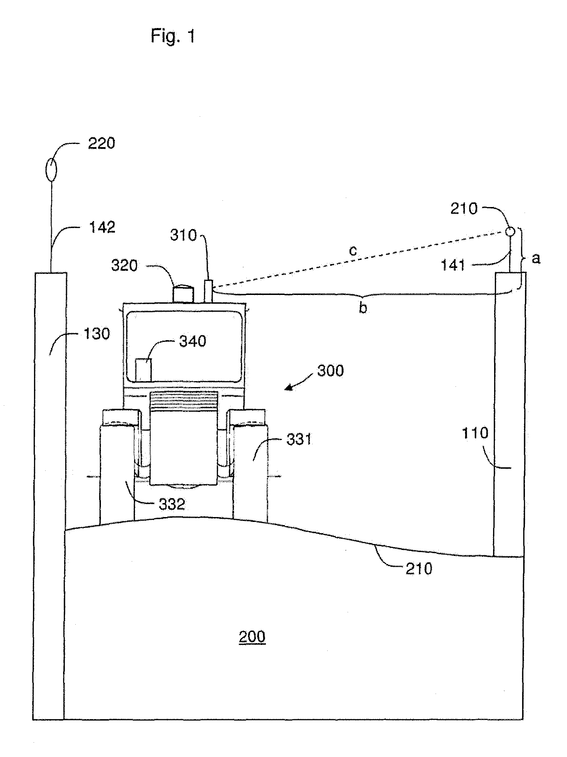

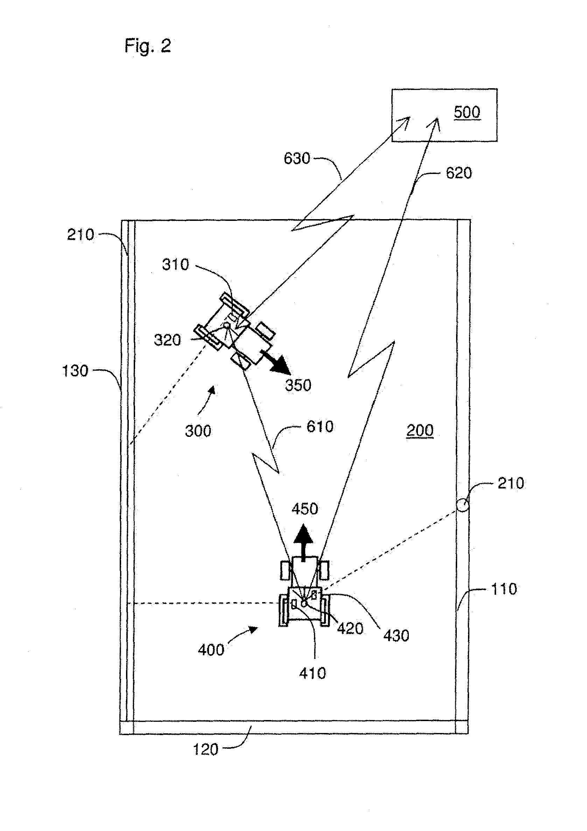

Fig. 1 zeigt einen Querschnitt durch ein Fahr- bzw. Flachsilo 100 mit zwei seitlichen Begrenzungswänden 110, 130. Eine dritte seitliche Begrenzungsrand 120 ist in Fig. 2 zu erkennen. Im Silo 100 befindet sich ein landwirtschaftliches Gut 200, hier Maishäckselgut. Ein Verdichtungsfahrzeug, hier ein Traktor 300, verdichtet das Häckselgut 200 durch Überfahren der Oberfläche 210 des zu verdichtenden Guts 200.

Auf den seitlichen Begrenzungswänden 110, 130 des Silos 100 sind zwei Referenzmarkierungen angebracht. Wie in Fig. 2 zu erkennen ist, handelt es sich bei der Referenzmarkierung 220 um eine Referenzlinie, die an einem Geländer 142 auf der seitlichen Begrenzungswand 130 des Silos 100 angeordnet ist. Die Referenzlinie 220 ist als Reflektorstreifen ausgebildet. Die Referenzmarkierung 210 ist, wie in Fig. 2 zu erkennen, als reflektierender Referenzpunkt ausgebildet und mittels einer Halterung 141 auf der seitlichen Begrenzungswand 110 des Silos 100 befestigt. Die Referenzmarkierungen 210, 220 sind in ihrer Position in der Ebene (Referenzpunkt 210) bzw. ihrer Start- und Endposition in der Ebene und ihrem Verlauf (Referenzlinie 220) bekannt. Die Referenzmarkierungen 210, 220 sind weiterhin nach ihrer Höhe bekannt und damit im dreidimensionalen Raum festgelegt.

Der Traktor 300 weist eine Sende- und Empfangseinrichtung 320 und eine Abstandsmessvornchtung 310 auf. Der Abstand der Sende- und Empfangseinrichtung 320 von der Abstandsmessvorrichtung 310 sowie deren Abstand von der Auflagefläche der Reifen 331, 332 des Traktors 300 auf der Oberfläche 210 des zu verdichtenden Guts 200 ist bekannt. Weiterhin sind die Reifenaufstandsflächen des Traktors 300 bekannt.

Die Sende- und Empfangseinrichtung 320 ist ausgebildet, GPS-Signale zu empfangen. Die Sende- und Empfangseinrichtung 320 ist weiterhin ausgebildet, mit einem zentralen System 500 und/oder mit einem oder mehreren weiteren Verdichtungsfahrzeugen 400 zu kommunizieren, wie in Fig. 2 dargestellt. Alternativ können getrennte Sende- und Empfangseinrichtungen zum Empfangen von GIPS-Signalen und zur Kommunikation mit dem zentralen System 500 und/oder mit einem oder mehreren weiteren Verdichtungsfahrzeugen 400 vorgesehen sein.

Der Traktor 300 weist weiterhin eine Auswerteeinheit 340 auf, die ausgebildet ist, aus dem mit der Einrichtung 320 empfangenen GPS-Signal die Position des Traktors 300 in der Ebene, hier in x- und y-Koordinaten, zu ermitteln. Damit sind die Positionen in der Ebene, hier in x- und y-Koordinaten, von der Sende- und Empfangseinrichtung 320 und von der Abstandsmessvorrichtung 310 bekannt. Aus der ebenfalls bekannten Position in der Ebene, hier in x- und y-Koordinaten, der Referenzmarkierung 210 ist der horizontale Abstand b in der Ebene von der Abstandsmessvorrichtung 310 zur Referenzmarkierung 210 ableitbar.

Die Abstandsmessvorrichtung 310 ist ausgebildet, vorzugsweise mittels Laser die Entfernung bzw. den Abstand zur Referenzmarkierung 210 und/oder zur Referenzmarkierung 220 zu ermitteln, Im in Fig. 1 dargestellten Fall ermittelt die Abstandsmessvorrichtung 310 den Abstand c zwischen der Abstandsmessvorrichtung 310 und der Referenzmarkierung 210. Abstände b und c sowie die Höhendifferenz a zwischen der Referenzmarkierung 210 und der am Traktor 300 angeordneten Abstandsmessvorrichtung 310 bilden ein rechtwinklige Dreieck. Aus den bekannten Abständen b und c ist die Höhendifferenz a somit ableitbar.

Da die Höhenlage der Referenzmarkierung 210 ebenso wie der Abstand der Abstandsmessvorrichtung 310 von der Auflagefläche der Reifen 331, 332 des Traktors 300 auf der Oberfläche 210 des zu verdichtenden Guts 200 bekannt ist, kann somit die Höhenlage der Oberfläche 210 des zu verdichtenden Guts 200, hier die z-Koordinate, ermittelt werden, indem von der Höhenlage der Referenzmarkierung die Höhendifferenz a und der Abstand der Abstandsmessvorrichtung 310 von der Auflagefläche der Reifen 331, 332 abgezogen werden.

Diese an einer bestimmten Position ermittelte Höhenlage der Oberfläche 210 des zu verdichtenden Guts 200 wird abgespeichert und beim erneuten Überfahren dieser Position mit dem Traktor 300 mit der dann neu ermittelten Höhenlage der Oberfläche 210 des zu verdichtenden Guts 200 verglichen. Ist eine deutliche Abnahme der Höhenlage zu verzeichnen, d.h. solange die Differenz der Höhenlagen einen bestimmten Grenzwert nicht unterschreitet, wird die Verdichtung fortgesetzt. Einem Fahrer des Traktors 300 wird dies vorzugsweise auf einer Anzeigevorrichtung, die beispielsweise an der Auswerteeinrichtung 340 angeordnet sein kann, zur Anzeige gebracht. Dazu kann ein der Position der ermittelten Höhenlagen entsprechendes Feld auf eher zwei- oder dreidimensionalen Darstellung des Fahr- bzw. Flachsilos etwa in rot oder gelb angezeigt werden.

Auch wenn - meist durch Aufbringen von neuem zu verdichtenden Gut - eine Zunahme der Höhenlage zu verzeichnen ist, wird die Verdichtung fortgesetzt bzw. wieder oder erstmals aufgenommen, für den Fall dass bereits ein Abbruch stattgefunden hatte bzw. die Verdichtung noch nicht begonnen hatte. Auch dies wird einem Fahrer des Traktors 300 vorzugsweise auf einer Anzeigevorrichtung durch rote oder gelbe Einfärbung eines der Position der ermittelten Höhenlagen entsprechenden Feldes zur Anzeige gebracht.

Wenn die an einer bestimmten Position ermittelte Höhenlage der Oberfläche 210 des zu verdichtenden Guts 200 beim erneuten Überfahren dieser Position mit dem Traktor 300 nicht mehr oder nur noch geringfügig abnimmt, d.h. die Differenz der Höhenlagen einen bestimmten Grenzwert unterschreitet, wird die Verdichtung dieser Position abgebrochen, d.h. dass für diese Position keine weiteren Überfahrten erforderlich sind, Einem Fahrer des Traktors 300 wird dies vorzugsweise auf einer Anzeigevorrichtung durch grüne Einfärbung eines der Position der ermittelten Höhenlagen entsprechenden Feldes zur Anzeige gebracht.

Wie in Fig. 2 dargestellt, können auch mehrere Verdichtungsfahrzeuge, hier zwei Traktoren 300 und 400, die Verdichtung von zu verdichtendem Gut 200 in einem Fahr- bzw. Flachsilo vornehmen. Dabei ist es besonders bevorzugt, wenn die Verdichtungsfahrzeuge 300, 400 miteinander über, vorzugsweise drahtlose, Kommunikationsverbindungen 610 und/oder mit einem zentralen System 500 über, vorzugsweise drahtlose, Kommunikationsverbindungen 620, 630 Daten austauschen können. Dadurch kann in vorteilhafter Weise erreicht werden, dass die jeweils aktuellsten ermittelten Höhenlagen von allen an der Verdichtung beteiligten Verdichtungsfahrzeugen 300, 400 in den jeweiligen Auswerteeinheiten der Verdichtungsfahrzeuge 300, 400 vorliegen und zur Ermittlung der Differenz der Höhenlagen sowie eines Maßes der Verdichtung und der Anzeige dieser Informationen zur Verfügung stechen. Auf diese Weise kann auf jedem der Verdichtungsfahrzeuge 300, 400 und/oder im zentralen System immer der Gesamtverdichtungsstatus bzw. -fortschritt angezeigt und/oder gespeichert werden.

Weiterhin ist in Fig. 2 zu erkennen, dass zwei Referenzmarkierungen, ein Referenzpunkt 210 und eine Referenzlinie 220, vorgesehen sind. Dies hat den Vorteil, dass für den Fall, dass die Abstandsmessvorrichtung 310, 410 eines Verdichtungsfahrzeugs 300, 400 eine Referenzmarkierung nicht erfassen kann, noch eine zweite Referenzmarkierung zur Verfügung steht, zu der der Abstand ermittelte werden kann.

Weiterhin kann es bevorzugt sein, beispielsweise den Traktor 400 mit zwei Abstandsmessvorrichtungen 410, 430 zu versehen, so dass die Höhenlagen dieser beiden Abstandsmessvorrichtungen 410, 430 ermittelt werden kann. Wenn deren Position am Traktor 400 bekannt ist, kann aus der Differenz der Höhenlagen der beiden Abstandsmessvorrichtungen 410, 430 die Neigung des Traktors 400 abgeleitet werden.

Wenn zur Ermittlung der Höhenlage des Traktors 300, 400 bzw. der Oberfläche 210 des zu verdichtenden Guts 200 der Abstand zur Referenzlinie 220 ermittelt wird, ist es vorteilhaft, den Winkel, unter dem diese Messung stattfindet, zu kennen. Dazu kann die Abstandsmessvorrichtung 310, 410 ausgebildet sein, die Messung in einem bestimmten Winkel, beispielsweise 90°, zur Fahrtrichtung 350, 450 des Traktors 300, 400 durchzuführen. Die Fahrtrichtung 350, 450 des Traktors 300, 400 kann beispielsweise aus einer Folge von GPS-Signalen oder einem entsprechenden Sensor ermittelt werden. Aus bekannter Position und Verlauf der Referenzlinie 220, bekannter Fahrtrichtung des Traktors 300, 400 und dem bekannten Winkel der Abstandsmessung zur Fahrtrichtung kann der Winkel, unter dem die Abstandsmessung zur Referenzlinie 220 durchgeführt wurde, ermittelt und zur Ermittlung der Höhenlage herangezogen werden.

### Bezugszeichenliste:

- 100: Fahr- bzw. Flachsilo
- 110: Seitliche Begrenzungswand
- 120: Seitliche Begrenzungswand
- 130: Seitliche Begrenzungswand
- 141: Befestigungsvorrichtung Referenzmarkierung
- 142: Geländer
- 200: Zu verdichtendes Gut
- 210: Oberfläche des zu verdichtenden Guts
- 300: Verdichtungsfahrzeug Traktor
- 310: Abstandsmessvorrichtung
- 320: Sende- und Empfangseinheit
- 331: Reifen
- 332: Reifen
- 340: Auswerteeinheit
- 350: Fahrtrichtung
- 400: Verdichtungsfahrzeug Traktor
- 410: Abstandsmessvorrichtung
- 420: Sende- und Empfangseinheit
- 430: Abstandsmessvorrichtung
- 450: Fahrtrichtung
- 500: Zentrales System
- 610: Kommunikationsweg Verdichtungsfahrzeug - Verdichttingsfahrzeug
- 620: Kommunikationsweg Verdichtungsfahrzeug - zentrales System
- 630: Kommunikationsweg Verdichtungsfahrzeug - zentrales System

## Patentansprüche

1. Verfahren zur Steuerung der Verdichtung eines landwirtschaftlichen Guts (200)in einem Fahr- bzw. Flachsilo (100),
**gekennzeichnet durch** die Schritte:
- Ermitteln einer Höhenlage der Oberfläche (210) des zu verdichtenden Guts (200) zu zwei oder mehreren Verdichtungszeitpunkten,
- Vergleichen der Höhenlage mit einer zuvor ermittelten Höhenlage,
- Abbrechen der Verdichtung, wenn die Differenz der Höhenlagen einen Grenzwert unterschreitet.

2. Verfahren nach dem vorhergehenden Anspruch,
**dadurch gekennzeichnet, dass** die Höhenlage mit den folgenden Schritten ermittelt wird:
- Ermitteln einer Position eines Verdichtungsfahrzeugs (300, 400) in der Ebene, vorzugsweise aus einem GPS-Signal,
- Ermitteln eines Abstands des Verdichtungsfahrzeugs (300, 400) zu zumindest einer Referenzmarkierung (210, 220), vorzugsweise mittels einer am Verdichtungsfahrzeug (300, 400) angeordneten Abstandsmessvorrichtung (310, 410, 430),
- Ermitteln der Höhenlage des Verdichtungsfahrzeugs (300, 400) aus der Position des Verdichtungsfahrzeugs (300, 400) und dem Abstand des Verdichtungsfahrzeugs (300, 400) zu der zumindest einen Referenzmarkierung (210, 220),
- Ableiten der Höhenlage der Oberfläche (210) des zu verdichtenden Guts (200) aus der Höhenlagen des Verdichtungsfahrzeugs (300, 400),

3. Verfahren nach dem vorhergehenden Anspruch,
**dadurch gekennzeichnet, dass** die zumindest eine Referenzmarkierung (210, 220) als Referenzpunkt (210) oder Referenzlinie (220) ausgebildet und vorzugsweise am Rand (110, 120, 130) oder außerhalb des Fahr- bzw. Flachsilos (100) angeordnet wird.

4. Verfahren nach einem der vorhergehenden Ansprüche,
**dadurch gekennzeichnet, dass** die Fahrtrichtung (350, 450) des Verdichtungsfahrzeugs (300, 400) ermittelt und ggf. zur Ermittlung der Höhenlage herangezogen wird.

5. Verfahren nach einem der vorhergehenden Ansprüche,
**gekennzeichnet durch** den Schritt:
- Ableiten eines Maßes der Verdichtung aus der Differenz der Höhenlagen.

6. Verfahren nach einem der vorhergehenden Ansprüche,
**dadurch gekennzeichnet, dass** für eine oder mehrere Positionen
- die Höhenlage zu einem oder mehreren Verdichtungszeitpunkten und/oder
- die Differenz der Höhenlagen zu einem oder mehreren Verdichtungszeitpunkten und der Höhe eines jeweils vorhergehenden Verdichtungszeitpunktes und/oder
- das Maß der Verdichtung
an ein oder mehrere weitere Verdichtungsfahrzeuge (300, 400) und/oder ein zentrales System (500) übersandt und/oder von einem oder mehreren weiteren Verdichtungsfahrzeuge (300, 400) und/oder einem zentralen System (500) empfangen und ggf. weiterverarbeitet werden.

7. Verfahren nach dem vorhergehenden Anspruch,
**dadurch gekennzeichnet, dass** die Höhenlage an einer Position mit einer an derselben Position zuvor von einem weiteren Verdichtungsfahrzeug (300, 400) ermittelten Höhenlage verglichen wird.

8. Verdichtungsfahrzeug (300, 400) zur Verdichtung eines landwirtschaftlichen Guts in einem Fahr- bzw. Flachsilo, mit
- einer Empfangseinheit zum Empfangen eines GPS-Signals,
- einer Auswerteeinrichtung, die ausgebildet ist, aus dem GPS-Signal eine Position des Verdichtungsfahrzeugs (300, 400) in der Ebene zu ermitteln,
**gekennzeichnet durch**
- eine Abstandsmessvorrichtung (310,410, 430), die ausgebildet ist, einen Abstand des Verdichtungsfahrzeugs (300, 400) zu zumindest einer Referenzmarkierung zu ermitteln, und
- eine Auswerteeinrichtung (340), die ausgebildet ist, aus der Position des Verdichtungsfahrzeugs (300, 400) und dem Abstand des Verdichtungsfahrzeugs (300, 400) zu der zumindest einen Referenzmarkierung (210, 220) die Höhenlage des Verdichtungsfahrzeugs (300, 400) zu ermitteln.

9. Verdichtungsfahrzeug (300, 400) nach dem vorhergehenden Anspruch,
**dadurch gekennzeichnet, dass** die Auswerteeinrichtung (340) ausgebildet ist, die Höhenlage an einer Position mit einer zuvor ermittelten Höhenlage an derselben Position zu vergleichen.

10. Verdichtungsfahrzeug (300,400) nach einem der beiden vorhergehenden Ansprüche,
**dadurch gekennzeichnet, dass** die Auswerteeinrichtung (340) ausgebildet ist, einen Abbruch der Verdichtung zu definieren, wenn die Differenz zwischen den Höhenlagen einen Grenzwert erreicht oder unterschreitet.

11. Verdichtungsfahrzeug (300, 400) nach einem der vorhergehenden Ansprüche 8 bis 10,
**dadurch gekennzeichnet, dass** die Auswerteeinrichtung (340) ausgebildet ist, aus der Höhenlage des Verdichtungsfahrzeugs die Höhenlagen der Oberfläche (21a) des zu verdichtenden Guts (200) abzuleiten.

12. Verdichtungsfahrzeug (300, 400) nach einem der vorhergehenden Ansprüche 8 bis 11,
**dadurch gekennzeichnet, dass** die Auswerteeinrichtung (340) ausgebildet ist, aus der Differenz zwischen den Höhenlagen ein Maß für die Verdichtung abzuleiten.

13. Verdichtungsfahrzeug (300, 400) nach einem der vorhergehenden Ansprüche 8 bis 12,
**gekennzeichnet durch** eine Sende- und Empfangsvorrichtung, die ausgebildet ist, für eine oder mehrere Positionen
- die Höhenlage zu einem oder mehreren Verdichtungszeitpunkten und/oder
- die Differenz der Höhenlagen zu einem oder mehreren Verdichtungszeitpunkten und der Höhe eines jeweils vorhergehenden Verdichtungszeitpunktes und/oder
- das Maß der Verdichtung
an ein oder mehrere weitere Verdichtungsfahrzeuge (300, 400) und/oder ein zentrales System (500) zu übersenden und/oder von einem oder mehreren weiteren Verdichtungsfahrzeuge (300, 400) und/oder einem zentralen System (500) zu empfangen.

14. Verdichtungsfahrzeug (300, 400) nach dem vorhergehenden Anspruch,
**dadurch gekennzeichnet, dass** die Auswerteeinrichtung (340) ausgebildet ist, die Höhenlage an einer Position mit einer an derselben Position zuvor von einem weiteren Verdichtungsfahrzeug (300, 400) ermittelten Höhenlage zu verglichen,

15. Verwendung einer an einem Verdichtungsfahrzeug (300, 400) angeordneten Abstandsmessvorrichtung (310, 410, 430) zur Steuerung der Verdichtung eines landwirtschaftlichen Guts (200) in einem Fahr- bzw. Flachsilo (100) nach einem der vorhergehenden Ansprüche 1 bis 7.
